# FASCICULE DE BREVET EUROPEEN

(11) **EP 3 230 207 B1**
(45) Date de publication et mention de la délivrance du brevet: **02.05.2018**
(21) Numéro de dépôt: 15760223.6
(22) Date de dépôt: 24.08.2015
(51) Int. Cl.: C01B 35/12, H01M 4/505, H01M 4/525, H01M 4/58, H01M 10/0525

(54) **MATERIAU D'ELECTRODE DE FORMULE LIFE(1-X)COXBO3, ET SON PROCEDE DE PREPARATION**
ELEKTRODENMATERIAL DER FORMEL LIFE(1-X)COXBO3 UND HERSTELLUNGSVERFAHREN DAFÜR
ELECTRODE MATERIAL OF FORMULA LIFE(1-X)COXBO3, AND PRODUCTION METHOD THEREOF

(30) Priorité: 17.10.2014 FR 1460004
(43) Date de publication de la demande: 18.10.2017
(73) Titulaire: Commissariat à l'Énergie Atomique et aux Énergies Alternatives, 75015 Paris (FR)
(72) Inventeur: LE ROUX, Barbara, F-38000 Grenoble (FR); BOURBON, Carole, F-38590 Saint Michel de Saint-Geoirs (FR); COLIN, Jean-François, F-38240 Meylan (FR)
(74) Mandataire: Cabinet Laurent & Charras
(86) Numéro de dépôt international: PCT/FR2015/052253
(87) Numéro de publication internationale: WO 2016/059306

(56) Documents cités:
- ATSUO YAMADA ET AL: "Synthesis and electrochemistry of monoclinic Li(MnxFe1-x)BO3: a combined experimental and computational study", JOURNAL OF MATERIALS CHEMISTRY, vol. 21, no. 29, 1 janvier 2011 (2011-01-01), page 10690, XP055017799, ISSN: 0959-9428, DOI: 10.1039/c1jm11131k
- V LEGAGNEUR: "LiMBO3 (M=Mn, Fe, Co): synthesis, crystal structure and lithium deinsertion/insertion properties", SOLID STATE IONICS, vol. 139, no. 1-2, 2 janvier 2001 (2001-01-02), pages 37-46, XP055109920, NL ISSN: 0167-2738, DOI: 10.1016/S0167-2738(00)00813-4
- BELKÉBIR A ET AL: "Synthesis, structural and vibrational analysis of LiMBO orthoborates (M=Mg, Co, Zn)", NEW JOURNAL OF CHEMISTRY, ROYAL SOCIETY OF CHEMISTRY, GB, vol. 20, no. 3, 1 janvier 1996 (1996-01-01), pages 311-316, XP008176900, ISSN: 1144-0546

## Description

### DOMAINE DE L'INVENTION

L'invention concerne un matériau à base de lithium-borate de formule LiFe₁₋ₓCoₓBO₃, ainsi que son utilisation en tant que matériau d'électrode et son procédé de préparation.

Le domaine d'utilisation de la présente invention concerne notamment le stockage de l'énergie et plus particulièrement les batteries lithium-ion.

### ETAT ANTERIEUR DE LA TECHNIQUE

Au cours des dernières décennies, différents types de batteries ont été développés afin de répondre aux exigences de taille, de poids et de capacité requises en fonction de la nature des dispositifs électroniques. Par exemple, les batteries lithium-ion s'avèrent particulièrement adaptées aux équipements électroniques portables en termes de densité énergétique et de stabilité dans le temps (cycles de charge / décharge).

De manière générale, une batterie lithium-ion est un assemblage d'une électrode positive (cathode), comprenant un matériau à base de lithium, et d'une électrode négative (anode), généralement à base de carbone (graphite par exemple). Son fonctionnement est assuré par l'échange réversible d'ions Li⁺ entre la cathode et l'anode, ces électrodes étant séparées par un électrolyte à base de sel de lithium.

Au cours du développement des batteries lithium-ion, de nombreux matériaux d'électrode positive ont été testés, notamment les phosphates LiMPO₄ (M= Mn, Fe, ou Co). Ces matériaux sont avantageux et suscitent beaucoup d'intérêts eu égard à la sécurité qu'ils offrent et à leur faible coût. Cependant, leur capacité spécifique théorique reste limitée à 170mAh/g pour LiFePO₄.

Dans le but d'obtenir des batteries ayant des capacités spécifiques plus élevées, d'autres matériaux ont été envisagés, notamment les borates LiMBO₃ (M = Mn, Fe, ou Co) comme le montrent par exemple les articles "Synthesis and electrochemistry of monoclinic Li(MnxFe1-x)BO3: a combined experimental and computational study" de A. Yamada et al., J. Mater. Chem., 2011, 21, 10690-10696 et "LiMBO3(M = Mn, Fe, Co): synthesis, crystal structure and lithium deinsertion/insertion properties" de V. Legagneur et al., Solid State Ionics, 2001, 139, 37-46. Ces matériaux présentent l'avantage de présenter une capacité théorique maximale (220mAh/g) supérieure à celle des phosphates LiMPO₄, tout en étant aussi attrayants en termes de sécurité.

Toutefois, les potentiels redox des couples Fe²⁺/Fe³⁺ et Mn²⁺/Mn³⁺ sont relativement bas, ce qui a pour conséquence de limiter la densité énergétique des composés LiFeBO₃ et LiMnBO₃.

Le composé LiCoBO₃ permet d'améliorer la densité énergétique, étant donné que le couple redox Co²⁺/Co³⁺ du cobalt possède un potentiel plus élevé que celui des couples Fe²⁺/Fe³⁺ et Mn²⁺/Mn³⁺. Néanmoins, l'inconvénient du composé LiCoBO₃, par rapport aux composés LiFeBO₃ et LiMnBO₃, est qu'il présente une capacité réversible expérimentale assez faible.

Ainsi, se présente le besoin d'améliorer les propriétés des matériaux lithium-borate, en développant un matériau qui présente les propriétés suivantes :
- une densité énergétique satisfaisante ;
- une bonne capacité spécifique massique ; et
- une bonne stabilité au cours du temps vis-à-vis des cycles de charge / décharge.

La présente invention concerne des composés lithium-borate, dont les propriétés permettent de résoudre ce problème. Ils comprennent à la fois les deux métaux de transition, fer et cobalt.

En outre, le Demandeur a constaté que les procédés de l'art antérieur ne permettent pas de préparer de tels composés comprenant à la fois des borates de fer et de cobalt lithiés. Ces procédés ne conduisent pas à la formation d'une seule phase contenant le fer et le cobalt.

Afin de remédier à cette difficulté technique, le Demandeur a mis au point un nouveau procédé en plusieurs étapes, prenant en considération les éventuelles incompatibilités relatives aux réactivités respectives des composés de cobalt et de fer.

### EXPOSE DE L'INVENTION

La présente invention a pour objet un matériau lithium-borate contenant à la fois du fer et du cobalt. La substitution partielle du fer par du cobalt dans le matériau LiFeBO₃ permet d'améliorer la densité énergétique par augmentation du potentiel moyen de réaction.

Ce matériau peut servir dans divers champs d'application, notamment dans le domaine du stockage de l'énergie. Il s'avère particulièrement attrayant pour constituer le matériau électroniquement actif de la cathode d'une batterie lithium-ion.

Plus précisément, la présente invention concerne un matériau d'électrode de formule LiFe₁₋ₓCoₓBO₃, dans laquelle 0 < x < 1.

De manière avantageuse, x est strictement supérieur à 0 et inférieur ou égal à 0,3 (0<x≤0,3), et encore plus avantageusement x = 0,3.

Ce matériau se présente sous forme cristalline et cristallise dans une maille monoclinique. Il présente une capacité spécifique massique théorique comprise entre 215 et 220 mAh/g, ce qui le rend particulièrement adapté pour une utilisation en tant que matériau actif d'électrode, avantageusement la cathode d'une batterie lithium-ion.

Un autre objet de l'invention concerne le procédé de préparation, par voie solide, de ce matériau d'électrode de formule LiFe₁₋ₓCoₓBO₃, avec 0 < x < 1. Ce procédé comprend les étapes suivantes :
a) préparation d'un borate de fer à partir d'un composé de fer et d'un composé de bore par :
   a1) broyage d'un mélange d'un composé de fer et d'un composé de bore ;
   a2) traitement thermique du mélange ainsi obtenu, sous atmosphère inerte, avantageusement sous argon, à une température comprise entre 300 et 1000°C, avantageusement entre 550 et 850°C ;
b) préparation d'un borate de cobalt à partir d'un composé de cobalt et d'un composé de bore par :
   b1) broyage d'un mélange d'un composé de cobalt et d'un composé de bore ;
   b2) traitement thermique du mélange ainsi obtenu, sous atmosphère oxydante, avantageusement sous air, à une température comprise entre 300 et 1000°C, avantageusement entre 550 et 850°C ;
c) préparation d'un mélange contenant le borate de fer, le borate de cobalt, un précurseur de lithium et de l'acide borique ;
d) traitement thermique du mélange sous atmosphère inerte, avantageusement sous argon ;
e) obtention d'un matériau de formule LiFe₁₋ₓCoₓBO₃, avec 0<x<1.

Ce procédé nécessite de synthétiser séparément les borates de fer et de cobalt. Les conditions adaptées à chacun de ces borates facilitent ainsi la stabilisation du cobalt à l'état d'oxydation 2+ lors de la formation du composé mixte LiFe₁₋ₓCoₓBO₃.

En revanche, ce composé mixte LiFe₁₋ₓCoₓBO₃ n'est pas obtenu lorsque les composés de fer, cobalt et bore sont traités simultanément en une seule étape. Dans ce cas, le cobalt 2+ peut être facilement réduit en cobalt métallique lors d'un traitement thermique sous atmosphère inerte, alors que le fer 2+ peut être facilement oxydé en fer 3+ lors d'un traitement thermique à l'air.

De manière générale, le composé de fer mis en oeuvre dans l'étape a1) est avantageusement choisi dans le groupe comprenant oxalate de fer (FeC₂O₄ pouvant notamment être sous forme hydratée ou non) ; carbonate de fer (FeCO₃) ; et oxyde de fer (II) (FeO). Un mélange de ces composés peut également être utilisé.

De manière générale, le composé de cobalt mis en oeuvre dans l'étape b1) est avantageusement choisi dans le groupe comprenant : oxalate de cobalt (CoC₂O₄ pouvant notamment être sous forme hydratée ou non) ; carbonate de cobalt (CoCO₃ hydraté ou non) ; et oxyde de cobalt (II) (CoO). Un mélange de ces composés peut également être utilisé.

Le composé de bore mis en oeuvre dans les étapes a1) et b1) est avantageusement l'oxyde de bore (B₂O₃) ou l'acide borique (H₃BO₃). Un mélange de ces composés peut également être utilisé.

Le composé de bore utilisé dans l'étape a1) peut être différent de celui utilisé dans l'étape b1).

Dans l'étape a1), le rapport molaire entre le composé de fer et le composé de bore est généralement compris entre 0,6 et 1,2, plus avantageusement entre 0,8 et 1.

Dans l'étape b1), le rapport molaire entre le composé de cobalt et le composé de bore est généralement compris entre 0,6 et 1,2, plus avantageusement entre 0,8 et 1.

Par rapport molaire, on entend le rapport molaire entre la quantité molaire de fer, ou de cobalt, et la quantité molaire de bore.

Le broyage mis en oeuvre dans les étapes a1) et b1) peut s'effectuer par tout moyen adapté et connu de l'homme du métier. Il permet de réduire les composés solides de fer, cobalt et bore en poudre fine.

Le broyage permet non seulement d'obtenir une poudre fine et homogène, mais aussi d'augmenter la surface spécifique de ces composés et donc d'améliorer leur réactivité.

De manière avantageuse, le broyage des étapes a1) et/ou b1) peut être effectué dans un broyeur à billes conventionnel.

Selon un mode de réalisation particulier, lorsque le broyeur utilisé est un broyeur à billes, la vitesse de rotation du broyeur est avantageusement comprise entre 100 et 900 tours/minute, plus avantageusement entre 250 et 750 tours/minute. Elle peut notamment être égale à 500 tours/minute.

De manière avantageuse, la durée du broyage des étapes a1) et/ou b1) est comprise entre 0,5 et 24 heures, plus avantageusement entre 1 et 12 heures. Elle peut notamment être égale à 5 heures.

De manière préférentielle, le broyat résultant de l'étape a1) ou b1) se présente sous la forme d'une poudre ayant un diamètre moyen de grain avantageusement compris entre 0,1 et 30 micromètres, et plus avantageusement entre 0,5 et 10 micromètres.

Les conditions de broyage des étapes a1) et b1) sont indépendantes les unes des autres. En d'autres termes, les conditions de broyage pour le fer ne sont pas nécessairement les mêmes que pour le cobalt. En outre, le diamètre moyen de grain du mélange issu de l'étape a1) (fer) n'est pas nécessairement le même que celui du mélange issu de l'étape b1) (cobalt).

Le traitement thermique (calcination) de l'étape a2) ou b2) qui suit l'étape a1) ou b1) de mélange et de broyage, permet au composé de fer ou de cobalt de réagir avec le composé de bore afin de produire un borate de fer ou un borate de cobalt.

Comme déjà indiqué, le traitement thermique des étapes a2) et b2) est réalisé sous atmosphère différente pour chaque matériau :
a2) sous atmosphère inerte (avantageusement sous argon) pour éviter l'oxydation du fer 2+ en fer 3+ ; et
b2) sous air pour éviter la réduction du cobalt 2+ qui se produit assez facilement à des températures supérieures ou égales à 500°C sous atmosphère inerte.

Pour ces raisons, les borates de fer et de cobalt sont préparés séparément, préalablement à la synthèse du composé LiFe₁₋ₓCoₓBO₃ par traitement thermique ultérieur sous atmosphère inerte lors de l'étape d) et ce, sans réduire le cobalt 2+ en cobalt métallique.

De manière avantageuse, le traitement thermique (a2 et/ou b2) peut être une étape de trempe thermique, c'est-à-dire un traitement ne comprenant pas de montée en température progressive.

Selon un autre mode de réalisation, la température du traitement thermique (a2 et/ou b2) est atteinte en appliquant une vitesse de chauffe, avantageusement comprise entre 1 et 20°C/minute, plus avantageusement entre 2 et 10°C/minute.

De manière préférentielle, le traitement thermique selon l'étape a2) consiste à chauffer le mélange issu de l'étape a1) à une température avantageusement comprise entre 300 et 1000°C, plus avantageusement entre 550 et 850°C. Elle peut également être comprise 650 et 850°C, particulièrement lorsque le traitement thermique est une étape de trempe thermique.

De manière préférentielle, le traitement thermique selon l'étape b2) consiste à chauffer le mélange issu de l'étape b1) à une température avantageusement comprise entre 300 et 1000°C, plus avantageusement entre 550 et 850°C. Elle peut également être comprise 700 et 850°C, particulièrement lorsque le traitement thermique est une étape de trempe thermique.

La durée du traitement thermique (a2 et/ou b2) est avantageusement comprise entre 5 et 1200 minutes, plus avantageusement entre 5 et 30 minutes. Cette durée peut être comprise entre 5 et 20 minutes, notamment lorsque le traitement thermique est une étape de trempe thermique.

A l'issue de l'étape a2) ou b2), le borate de fer ou de cobalt est refroidi. La vitesse de refroidissement est avantageusement comprise entre 2 et 20°C/minute, plus avantageusement entre 5 et 10°C/minute, jusqu'à atteindre la température ambiante.

De manière avantageuse, le refroidissement est une étape de trempe sous air, c'est-à-dire un traitement ne comprenant pas de baisse de température progressive. Il s'agit alors du passage instantané de la température de traitement thermique à la température ambiante. Pour le borate de fer, il s'agit d'une trempe à l'air du récipient (tube par exemple) contenant l'échantillon (le récipient fermé contenant l'échantillon est sorti à l'air mais il reste sous atmosphère inerte).

La durée du traitement thermique (a2 et/ou b2) n'inclut pas la durée de chauffe ou de refroidissement.

Les conditions du traitement thermique des étapes a2) et b2) sont indépendantes. En d'autres termes, la vitesse de chauffe, la durée et la température du traitement thermique, et la vitesse de refroidissement relatives au borate de fer ne sont pas nécessairement les mêmes que celles relatives au borate de cobalt.

En outre, les conditions de traitement thermique, relatives à l'atmosphère inerte ou oxydante, sont adaptées à la réactivité des composés de fer et de cobalt. Cette différence de conditions dans les étapes a2) et b2) permet d'obtenir ultérieurement le composé de formule LiFe₁₋ₓCoₓBO₃ (avec 0 < x < 1) cristallin et monoclinique.

Une fois les étapes a) et b) réalisées, le borate de fer et le borate de cobalt sont mélangés (et avantageusement broyés) en présence d'un précurseur de lithium et d'acide borique (étape c)).

L'homme du métier saura ajuster les quantités respectives de ces composés afin d'obtenir le matériau de formule LiFe₁₋ₓCoₓBO₃ (avec 0 < x < 1).

Selon un mode de réalisation particulier, le mélange de l'étape c) peut comprendre, pour une mole de lithium :
- 0,01 à 0,5 moles de borate de fer, avantageusement 0,03 à 0,35 moles ;
- 0,01 à 0,5 moles de borate de cobalt, avantageusement 0,03 à 0,35 moles ;
- 0,001 à 0,5 moles d'acide borique, avantageusement 0,01 à 0,35 moles.

Le précurseur de lithium mis en oeuvre dans l'étape c) est avantageusement le carbonate de lithium (Li₂CO₃) ou l'hydroxyde de lithium. L'hydroxyde de lithium peut se présenter sous sa forme hydratée ou non (LiOH ou LiOH.xH₂O). Il peut également s'agir d'un mélange de ces composés.

Selon un mode de réalisation particulier, l'étape c) peut être suivie d'une étape de broyage, préalablement au traitement thermique de l'étape d). Ce broyage optionnel est avantageusement réalisé dans un broyeur à billes. Dans ce cas, la vitesse de rotation du broyeur est avantageusement comprise entre 100 et 900 tours/minute, plus avantageusement entre 250 et 750 tours/minute.

La durée du broyage optionnel précédant l'étape d) est avantageusement comprise entre 0,5 et 24 heures, plus avantageusement entre 1 et 12 heures.

Le broyage optionnel précédant l'étape d) permet d'obtenir une poudre homogène dont le diamètre moyen de grain est avantageusement compris entre 0,1 et 30 micromètres, plus avantageusement entre 0,5 et 10 micromètres.

Le mélange résultant de l'étape c) (éventuellement broyé) est ensuite traité thermiquement lors de l'étape d).

La température du traitement thermique de l'étape d) est avantageusement comprise entre 300 et 900°C, plus avantageusement entre 400 et 700°C, et encore plus avantageusement entre 400 et 600°C.

La vitesse de chauffe est avantageusement comprise entre 1 et 20°C/minute, plus avantageusement entre 2 et 10°C/minute.

Comme déjà indiqué, le traitement thermique de l'étape d) est réalisé sous atmosphère inerte, par exemple sous argon, ou sous azote. De manière préférentielle, il est réalisé sous argon.

La durée du traitement thermique de l'étape d) est avantageusement comprise entre 15 et 1200 minutes, plus avantageusement entre 30 et 1200 minutes, et encore plus avantageusement entre 45 et 180 minutes. Elle peut notamment être égale à 120 minutes. Elle est avantageusement supérieure ou égale à 75 ou 90 minutes, notamment à 500°C.

De manière avantageuse, le traitement thermique peut être une étape de trempe thermique, c'est-à-dire un traitement ne comprenant pas de montée en température progressive.

A l'issue de l'étape d), le matériau est refroidi. La vitesse de refroidissement est avantageusement comprise entre 2 et 20°C/minute, plus avantageusement entre 5 et 10°C/minute, jusqu'à atteindre la température ambiante.

De manière avantageuse, le refroidissement est une étape de trempe sous air, c'est-à-dire un traitement ne comprenant pas de baisse de température progressive. Il s'agit alors du passage instantané de la température de traitement thermique à la température ambiante.

La durée du traitement thermique de l'étape d) n'inclut pas la durée de chauffe ou de refroidissement.

Selon un mode de réalisation particulier, le traitement thermique de l'étape d) est avantageusement une trempe thermique réalisé à une température comprise entre 450 et 600°C, avantageusement entre 400 et 550°C, pendant une durée comprise entre 15 et 120 minutes.

Selon un mode de réalisation préféré, le procédé comprend les étapes suivantes :
a) préparation d'un borate de fer à partir d'un composé de fer et d'un composé de bore, par trempe thermique sous atmosphère inerte (argon ou azote) à une température comprise entre 650 et 850°C pendant une durée comprise entre 5 et 30 minutes, avantageusement entre 5 et 20 minutes ;
b) préparation d'un borate de cobalt à partir d'un composé de cobalt et d'un composé de bore, par trempe thermique sous atmosphère oxydante (avantageusement sous air) à une température comprise entre 700 et 850°C pendant une durée comprise entre 5 et 30 minutes, avantageusement entre 5 et 20 minutes ;
c) préparation et broyage d'un mélange contenant le borate de fer, le borate de cobalt, un précurseur de lithium et de l'acide borique ;
d) trempe thermique du mélange sous atmosphère inerte (argon ou azote), à une température comprise entre 400 et 550°C pendant une durée comprise entre 15 et 120 minutes ;
e) obtention d'un matériau de formule LiFe₁₋ₓCoₓBO₃, avec 0<x<1.

Le produit final obtenu à l'étape e) est un matériau de formule LiFe₁₋ₓCoₓBO₃ dans laquelle x est strictement supérieur à 0 et strictement inférieur à 1. En d'autres termes, le matériau comprend nécessairement du fer et du cobalt.

Il s'agit d'un matériau cristallin monoclinique. Il se présente généralement sous la forme d'agglomérats de particules.

Le diamètre moyen des agglomérats obtenus après traitement thermique de l'étape d) est avantageusement compris entre 0,5 et 10 micromètres, plus avantageusement entre 0,5 et 5 micromètres. Il dépend notamment de la nature du traitement thermique. Il est avantageusement compris entre 1 et 5 micromètres dans le cas de la trempe thermique, alors qu'il est avantageusement compris 4 et 10 micromètres lorsque le traitement thermique ne correspond pas à une étape de trempe.

Le diamètre moyen des particules primaires constituant les agglomérats et obtenues après traitement thermique de l'étape d) est avantageusement compris entre 0,1 et 1 micromètre, plus avantageusement entre 0,1 et 0,5 micromètre. Il dépend notamment de la nature du traitement thermique. Il est avantageusement compris entre 0,1 et 0,4 micromètre dans le cas de la trempe thermique, alors qu'il est avantageusement compris 0,5 et 1 micromètre lorsque le traitement thermique ne correspond pas à une étape de trempe.

La présente invention concerne également la batterie lithium-ion comprenant une cathode dans laquelle le matériau électroniquement actif est le matériau de formule LiFe₁₋ₓCoₓBO₃, avec 0<x<1.

L'homme du métier saura mettre en oeuvre les techniques conventionnelles pour préparer cette batterie, notamment en préparant une cathode par dépôt du matériau LiFe₁₋ₓCoₓBO₃ sur un collecteur de courant.

A titre d'exemple, il peut s'agir du dépôt d'une encre contenant le matériau actif d'électrode préalablement broyé en présence d'un conducteur électronique. Typiquement, les conducteurs électroniques utilisés sont des fibres de carbone déposées en phase vapeur (VGCF de l'acronyme anglais « *vapour grown carbon fibers* »), ou plus avantageusement du noir de carbone tel que le Ketjenblack®.

L'invention et les avantages qui en découlent ressortiront mieux des figures et exemples suivants donnés afin d'illustrer l'invention et non de manière limitative.

### DESCRIPTION DES FIGURES

La figure 1 correspond aux diffractogrammes des composés LiFe₁₋ₓCoₓBO₃ lorsque x est égal à 0 ; 0,5 ; et 1.
La figure 2 correspond à une vue agrandie des diffractogrammes des composés LiFe₁₋ₓCoₓBO₃ lorsque x = 0 ; 0,5 ; et 1.
La figure 3 est une image obtenue par microscopie à balayage électronique (MEB) du composé LiFe_{0,5}Co_{0,5}BO₃ selon un mode de réalisation particulier de l'invention.
La figure 4 correspond au cyclage galvanostatique à C/20 pour les composés LiFe₁₋ₓCoₓBO₃ (x = 0,5 et 1).
La figure 5 correspond au voltampérogramme cyclique à 0,05mV/s pour le composé LiFe_{0,5}Co_{0,5}BO₃.

### EXEMPLES DE REALISATION DE L'INVENTION

Des composés de formule LiFe₁₋ₓCoₓBO₃ (x = 0 ; 0,5 ; et 1) ont été préparés selon un mode de réalisation du procédé objet de la présente invention.

### 1/ Préparation de LiFe₁₋ₓCoₓBO₃ (x = 0 ; 0,5 ; et 1)

Le composé LiFe₁₋ₓCoₓBO₃ a été préparé selon les étapes suivantes :
a) préparation d'un borate de fer à partir d'un composé de fer et d'un composé de bore ;
b) préparation d'un borate de cobalt à partir d'un composé de cobalt et d'un composé de bore ;
c) préparation et broyage d'un mélange contenant le borate de fer, le borate de cobalt, un précurseur de lithium et de l'acide borique ;
d) traitement thermique du mélange sous atmosphère inerte ;
e) obtention du matériau de formule LiFe₁₋ₓCoₓBO₃, avec 0 ≤ x ≤1.

Dans ce procédé, le borate de fer Fe₂B₂O₅ et le borate de cobalt Co₃B₂O₆ sont synthétisés séparément.

### - Etape a) : Synthèse du borate de fer

Les composés de bore et de fer sont dispersés dans du cyclohexane, et mélangés pendant cinq heures à 500 tours par minute dans un bol de 50 ml contenant 10 billes en inox à l'aide d'un broyeur planétaire (Retsch). Le cyclohexane est ensuite évaporé à l'air.

Ce mélange est ensuite traité thermiquement dans un creuset en alumine sous atmosphère inerte (argon) à 800°C pendant 30 minutes avec une rampe en température de 5°C par minute en montée et de 10°C par minute en descente.

### - Etape b) : Synthèse du borate de cobalt

Les composés de bore et de cobalt sont mélangés de la même façon que pour le borate de fer.

Ce mélange est ensuite traité thermiquement dans un creuset en alumine à l'air à 800°C pendant six heures avec une rampe en température de 5°C par minute en montée et de 10°C par minute en descente.

### - Etape c) : préparation et broyage d'un mélange de composés de Fe, Co, Li

Les borates de fer et de cobalt sont ensuite mélangés avec le sel de lithium et l'acide borique. Pour cela, ces composés, sous forme de poudre, sont dispersés dans du cyclohexane et mélangées cinq heures à 500 tours par minute dans un bol de 50 ml contenant 10 billes en inox à l'aide d'un broyeur planétaire (Retsch).

Le cyclohexane est ensuite évaporé à l'air.

### - Etapes d) et e) : traitement thermique et obtention de LiFe₁₋ₓCoₓBO₃

Le mélange est ensuite traité thermiquement dans un creuset en alumine sous atmosphère inerte (argon) à 500°C pendant 90 minutes avec une rampe en température de 5°C par minute en montée et de 20°C par minute en descente.

Les composés mis en oeuvre et les quantités respectives sont mentionnées dans les tableaux 1 et 2. Le lithium et le bore sont introduits en léger excès par rapport au fer et/ou au cobalt.

**Tableau 1 : composés mis en oeuvre pour préparer les borates de fer et de cobalt**

| x | FeC₂O₄.2H₂O (g) | CoC₂O₄.2H₂O (g) | B₂O₃ (g) étape a) - étape b) |
|---|---|---|---|
| 0 | 3,38 | 0 | 0,66 - 0 |
| 0,5 | 3,38 | 7,32 | 0,66 - 1,39 |
| 1 | 0 | 7,32 | 0 - 1,39 |

**Tableau 2 : composés mis en oeuvre pour préparer LiFe₁₋ₓCoₓBO₃ (x = 0 ; 0,5 ; et 1)**

| x | Fe₂B₂O₅ (g) | Co₃B₂O₆ (g) | Li₂CO₃ (g) | acide borique (g) |
|---|---|---|---|---|
| 0 | 0,87 | 0 | 0,32 | 0 |
| 0,5 | 0,44 | 0,40 | 0,32 | 0,09 |
| 1 | 0 | 1,50 | 0,59 | 0,32 |

### 2/ Tests électrochimiques :

### a) Préparation de l'électrode positive

Le matériau actif LiFe_{0,5}Co_{0,5}BO₃ est mélangé à 85% en masse avec un carbone de grande surface spécifique (Ketjen black JD600) (15% en masse) pendant 4 heures à 500 tours par minute dans un bol de 50 ml contenant 10 billes en inox à l'aide d'un broyeur planétaire (Retsch).

Ensuite, le produit obtenu est mélangé à 90% en masse à du polyfluorure de vinylidène (10% en masse) dissous dans de la N-méthyl-2-pyrrolidone.

Enfin, le mélange est enduit sur une feuille d'aluminium (100 µm) puis séché à 60°C. L'électrode est alors composée de 76,5% en masse de matière active, 13,5% de carbone et 10% de polyfluorure de vinylidène (Pvdf).

### b) Montage de l'accumulateur

L'électrode réalisée est introduite dans une cellule de type « pile bouton » au format 2032.

L'électrode négative est constituée de lithium métallique.

Deux types de séparateurs ont été utilisés :
- un film de polypropylène (Celgard® 2400), et
- un film en polyoléfine (Viledon®).

L'électrolyte utilisé est composé de carbonate d'éthylène, de carbonate de propylène, de carbonate de diméthyle et d'hexafluorophosphate de lithium (LiPF₆) (Electrolyte LP100 de chez Powerlyte).

### c) Cyclage galvanostatique

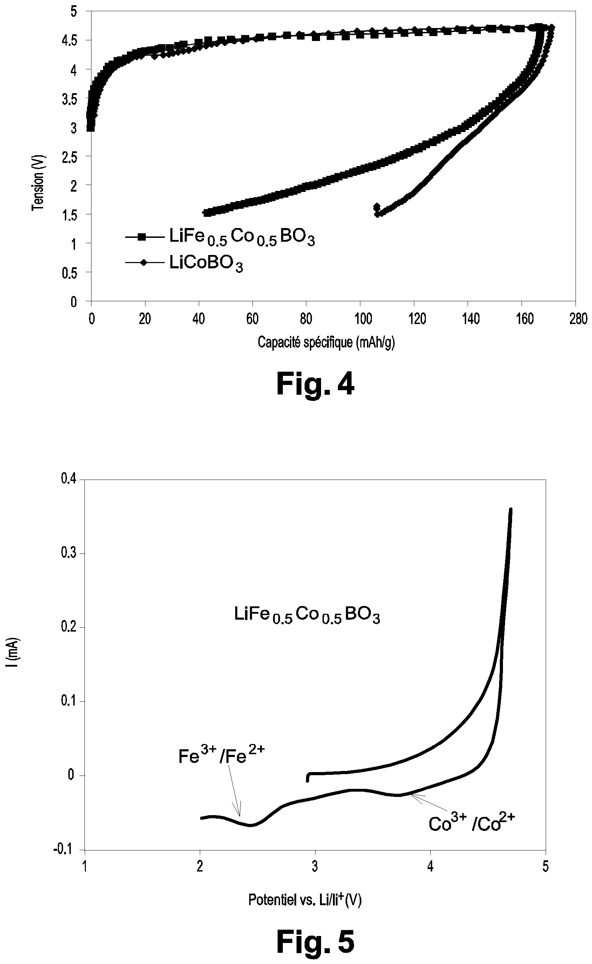

A température ambiante, un courant est imposé au système afin d'obtenir un régime de C/20, c'est-à-dire l'extraction/insertion d'un ion lithium en 20 heures. La figure 4 permet de comparer le premier cycle d'un cyclage galvanostatique à C/20 entre 1,5 et 4,7 V pour les composés LiFe_{0,5}Co_{0,5}BO₃ et LiCoBO₃.

En outre, la figure 4 montre que la capacité réversible (c'est-à-dire la capacité obtenue en décharge) obtenue au premier cycle pour le composé LiFe_{0,5}Co_{0,5}BO₃ est très supérieure à celle obtenue pour LiCoBO₃ : 125 mAh/g vs. 64 mAh/g.

La figure 5 correspond au voltampérogramme cyclique à 0,05mV/s pour le composé LiFe_{0,5}Co_{0,5}BO₃. Ce graphe montre le potentiel redox des couples Fe³⁺/Fe²⁺ et Co³⁺/Co²⁺ du composé LiFe_{0,5}Co_{0,5}BO₃.

### 3/ Caractérisation du composé LiFe₁₋ₓCoₓBO₃ :

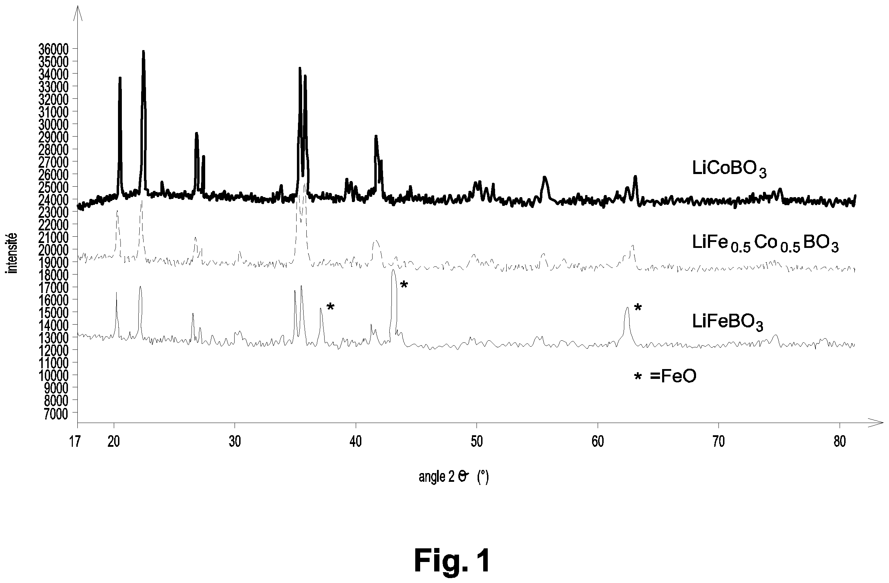

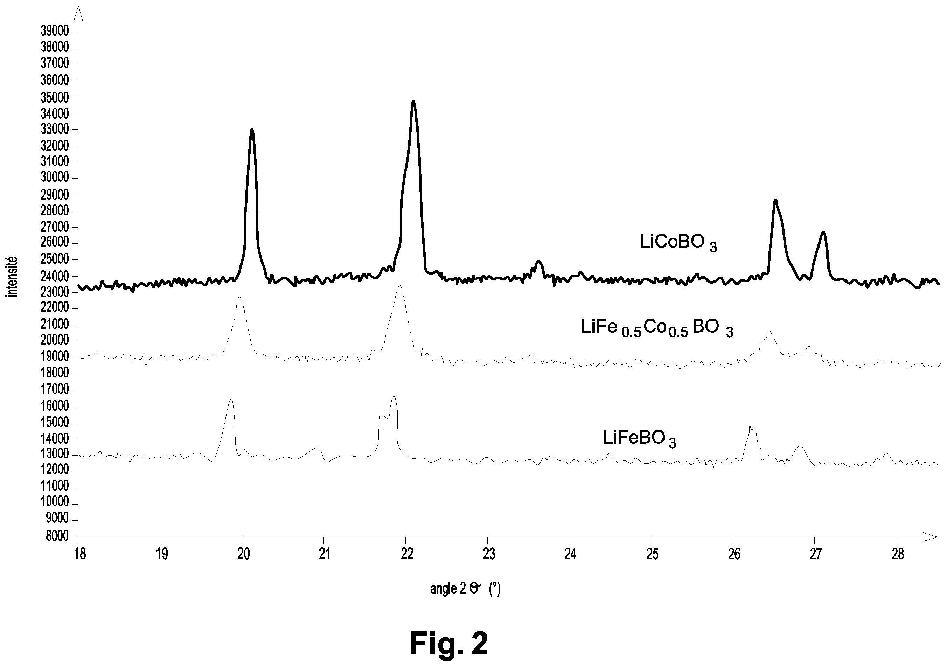

Les figures 1 et 2 correspondent aux diffractogrammes des composés LiFe₁₋ₓCoₓBO₃ lorsque x = 0 ; 0,5 ; et 1. Ils montrent bien que la structure monoclinique est conservée pour LiFe_{0,5}Co_{0,5}BO₃.

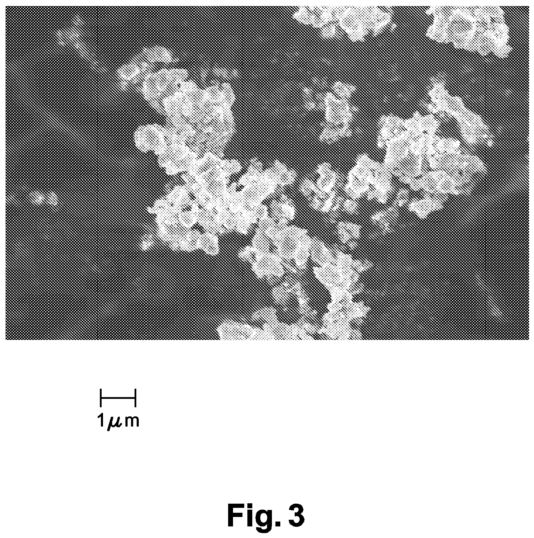

La figure 3 correspond à une image obtenue par microscopie à balayage électronique (MEB) du composé LiFe_{0,5}Co_{0,5}BO₃ selon la présente invention.

## Revendications

1. Matériau d'électrode de formule LiFe₁₋ₓCoₓBO₃, dans laquelle 0 < x < 1.

2. Matériau d'électrode selon la revendication 1, ***caractérisé* en ce que** 0 < x ≤ 0,3.

3. Procédé de préparation d'un matériau d'électrode de formule LiFe₁₋ₓCoₓBO₃, avec 0 < x < 1, comprenant les étapes suivantes :
a) préparation d'un borate de fer à partir d'un composé de fer et d'un composé de bore par :
a1) broyage d'un mélange d'un composé de fer et d'un composé de bore ;
a2) traitement thermique du mélange ainsi obtenu, sous atmosphère inerte, à une température comprise entre 300 et 1000°C ;
b) préparation d'un borate de cobalt à partir d'un composé de cobalt et d'un composé de bore par :
b1) broyage d'un mélange d'un composé de cobalt et d'un composé de bore ;
b2) traitement thermique du mélange ainsi obtenu, sous atmosphère oxydante, à une température comprise entre 300 et 1000°C ;
c) préparation d'un mélange contenant le borate de fer, le borate de cobalt, un précurseur de lithium et de l'acide borique ;
d) traitement thermique du mélange sous atmosphère inerte ;
e) obtention d'un matériau de formule LiFe₁₋ₓCoₓBO₃, avec 0<x<1.

4. Procédé selon la revendication 3, ***caractérisé* en ce que** le composé de fer est choisi dans le groupe comprenant : oxalate de fer ; carbonate de fer ; et oxyde de fer (II).

5. Procédé selon la revendication 3 ou 4, ***caractérisé* en ce que** le composé de cobalt est choisi dans le groupe comprenant : oxalate de cobalt ; carbonate de cobalt ; et oxyde de cobalt (II).

6. Procédé selon l'une des revendications 3 à 5, ***caractérisé* en ce que** le composé de bore est l'oxyde de bore ou l'acide borique.

7. Procédé selon l'une des revendications 3 à 6, ***caractérisé* en ce que** le précurseur de lithium est le carbonate de lithium ou l'hydroxyde de lithium.

8. Procédé selon l'une des revendications 3 à 7, ***caractérisé* en ce que** le traitement thermique de l'étape d) est réalisé à une température comprise entre 300 et 900°C, avantageusement entre 400 et 700°C, pendant une durée comprise entre 30 et 1200 minutes.

9. Procédé selon l'une des revendications 3 à 8, ***caractérisé* en ce qu'**il comprend les étapes suivantes :
a) préparation d'un borate de fer à partir d'un composé de fer et d'un composé de bore, par trempe thermique sous atmosphère inerte à une température comprise entre 650 et 850°C pendant une durée comprise entre 5 et 30 minutes ;
b) préparation d'un borate de cobalt à partir d'un composé de cobalt et d'un composé de bore, par trempe thermique sous atmosphère oxydante à une température comprise entre 700 et 850°C pendant une durée comprise entre 5 et 30 minutes ;
c) préparation et broyage d'un mélange contenant le borate de fer, le borate de cobalt, un précurseur de lithium et de l'acide borique ;
d) trempe thermique du mélange sous atmosphère inerte, à une température comprise entre 400 et 550°C pendant une durée comprise entre 15 et 120 minutes ;
e) obtention d'un matériau de formule LiFe₁₋ₓCoₓBO₃, avec 0<x<1.

10. Batterie lithium-ion comprenant une cathode dans laquelle le matériau électroniquement actif est le matériau selon la revendication 1 ou 2.

## Patentansprüche

1. Elektrodenmaterial mit der Formel LiFe₁₋ₓCoₓBO₃, bei dem 0 < x < 1.

2. Elektrodenmaterial gemäß Anspruch 1, **dadurch gekennzeichnet, dass** 0 < x < 0,3.

3. Verfahren zur Herstellung eines Materials mit der Formel LiFe₁₋ₓCoₓBO₃, mit 0 < x < 1, das die folgenden Schritte umfasst:
a) Herstellung eines Eisenborats mittels einer Eisenverbindung und einer Borverbindung durch:
a1) Zerkleinern einer Mischung aus einer Eisenverbindung und einer Borverbindung;
a2) Wärmebehandlung der so erhaltenen Mischung in einer inerten Atmosphäre bei einer Temperatur zwischen 300 und 1.000°C;
b) Herstellung eines Kobaltborats mittels einer Kobaltverbindung und einer Borverbindung durch:
b1) Zerkleinern einer Mischung aus einer Kobaltverbindung und einer Borverbindung;
b2) Wärmebehandlung der so erhaltenen Mischung in einer inerten Atmosphäre bei einer Temperatur zwischen 300 und 1.000°C;
c) Herstellung einer Mischung, die das Eisenborat, das Kobaltborat, einen Lithiumvorläufer und Borsäure enthält;
d) Wärmebehandlung der Mischung in einer inerten Atmosphäre,
e) Erhalt eines Materials mit der Formel LiFe₁₋ₓCoₓBO₃, bei dem 0 < x < 1.

4. Verfahren gemäß Anspruch 3, **dadurch gekennzeichnet, dass** die Eisenverbindung aus der Gruppe ausgewählt wird, zu der Eisenoxalat, Eisenkarbonat und Eisen(II)-oxid gehören.

5. Verfahren gemäß Anspruch 3 oder 4, **dadurch gekennzeichnet, dass** die Kobaltverbindung aus der Gruppe ausgewählt wird, zu der Kobaltoxalat, Kobaltkarbonat und Kobalt(II)-oxid gehören.

6. Verfahren gemäß einem der Ansprüche 3 bis 5, **dadurch gekennzeichnet, dass** es sich bei der Borverbindung um Boroxid oder Borsäure handelt.

7. Verfahren gemäß einem der Ansprüche 3 bis 6, **dadurch gekennzeichnet, dass** es sich bei dem Lithiumvorläufer um Lithiumkarbonat oder Lithiumhydroxid handelt.

8. Verfahren gemäß einem der Ansprüche 3 bis 7 **dadurch gekennzeichnet, dass** die Wärmebehandlung aus Schritt d) bei einer Temperatur zwischen 300 und 900°C, noch besser zwischen 400 und 700°C, während einer Dauer zwischen 30 und 1.200 Minuten durchgeführt wird.

9. Verfahren gemäß einem der Ansprüche 3 bis 8, **dadurch gekennzeichnet, dass** es die folgenden Schritte umfasst:
a) Herstellung eines Eisenborats mittels einer Eisenverbindung und einer Borverbindung durch thermisches Härten in inerter Atmosphäre bei einer Temperatur zwischen 650 und 850°C während einer Dauer von 5 bis 30 Minuten,
b) Herstellung eines Kobaltborats mittels einer Kobaltverbindung und einer Borverbindung durch thermisches Härten in oxidierender Atmosphäre bei einer Temperatur zwischen 700 und 850°C während einer Dauer von 5 bis 30 Minuten,
c) Herstellung und Zerkleinerung einer Mischung, die das Eisenborat, das Kobaltborat, einen Lithiumvorläufer und Borsäure enthält;
d) thermisches Härten der Mischung in inerter Atmosphäre bei einer Temperatur zwischen 400 und 550 °C während einer Dauer zwischen 5 und 120 Minuten;
e) Erhalt eines Materials mit der Formel LiFe₁₋ₓCoₓBO₃, bei dem 0 < x < 1.

10. Lithium-Ionenbatterie mit einer Kathode, in der das elektronisch aktive Material das Material gemäß Anspruch 1 oder 2 ist.

## Claims

1. An electrode material of formula LiFe₁₋ₓCoₓBO₃, wherein 0 < x < 1.

2. The electrode material of claim 1, ***characterized* in that** 0 < x ≤ 0.3.

3. A method of preparing an electrode material of formula LiFe₁₋ₓCoₓBO₃, with 0 < x < 1, comprising the steps of:
a) preparing an iron borate from an iron compound and a boron compound by:
a1) milling of a mixture of an iron compound and of a boron compound;
a2) thermal treatment of the mixture thus obtained, under an inert atmosphere, at a temperature in the range from 300 to 1,000 °C;
b) preparing a cobalt borate from a cobalt compound and a boron compound by:
b1) milling of a mixture of a cobalt compound and of a boron compound;
b2) thermal treatment of the mixture thus obtained, under an oxidizing atmosphere, at a temperature in the range from 300 to 1,000 °C;
c) preparing a mixture containing the iron borate, the cobalt borate, a precursor of lithium, and boric acid;
d) thermally treating the mixture under an inert atmosphere;
e) obtaining a material of formula LiFe₁₋ₓCoₓBO₃, with 0 < x < 1.

4. The method of claim 3, ***characterized* in that** the iron compound is selected from the group comprising: iron oxalate; iron carbonate; and iron oxide (II).

5. The method of claim 3 or 4, ***characterized* in that** the cobalt compound is selected from the group comprising: cobalt oxalate; cobalt carbonate; and cobalt oxide (II).

6. The method of any of claims 3 to 5, ***characterized* in that** the boron compound is boron oxide or boric acid.

7. The method of any of claims 3 to 6, ***characterized* in that** the lithium precursor is lithium carbonate or lithium hydroxide.

8. The method of any of claims 3 to 7, ***characterized* in that** the thermal treatment of step d) is carried out at a temperature in the range from 300 to 900°C, advantageously from 400 to 700°C, for a duration in the range from 30 to 1,200 minutes.

9. The method of any of claims 3 to 8, ***characterized* in that** it comprises the steps of:
a) preparing an iron borate from an iron compound and a boron compound, by thermal quenching under an inert atmosphere at a temperature in the range from 650 to 850 °C for a duration in the range from 5 to 30 minutes;
b) preparing a cobalt borate from a cobalt compound and a boron compound, by thermal quenching under an oxidizing atmosphere at a temperature in the range from 700 to 850 °C for a duration in the range from 5 to 30 minutes;
c) preparing and milling a mixture containing the iron borate, the cobalt borate, a precursor of lithium, and boric acid;
d) thermally quenching the mixture under an inert atmosphere, at a temperature in the range from 400 to 550 °C for a duration in the range from 15 to 120 minutes;
e) obtaining a material of formula LiFe₁₋ₓCoₓBO₃, with 0 < x < 1.

10. A lithium-ion battery comprising a cathode, wherein the electronically-active material is the material of claim 1 or 2.
